# FASCICULE DE BREVET EUROPEEN

(11) **EP 3 732 418 B1**
(45) Date de publication et mention de la délivrance du brevet: **03.09.2025**
(21) Numéro de dépôt: 19705778.9
(22) Date de dépôt: 16.01.2019
(51) Int. Cl.: F28D 1/04, F28D 1/053, F28F 9/02, H05K 7/20, B60H 1/00, F28D 21/00

(54) **ECHANGEUR DE CHALEUR POUR VEHICULE, MÛ AU MOINS EN PARTIE PAR UN MOTEUR ELECTRIQUE**
WÄRMETAUSCHER FÜR EIN FAHRZEUG, DAS ZUMINDEST TEILWEISE DURCH EINEN ELEKTROMOTOR ANGETRIEBEN WIRD
HEAT EXCHANGER FOR A VEHICLE, PROPELLED AT LEAST IN PART BY AN ELECTRIC MOTOR

(30) Priorité: 16.01.2018 FR 1850320
(43) Date de publication de la demande: 04.11.2020
(73) Titulaire: Valeo Systemes Thermiques-THS, 78322 Le Mesnil Saint Denis Cedex (FR)
(72) Inventeur: ETIENNE, Erwan, TOKYO, 151--0062 (JP); CHARBONNELLE, François, 78322 LE MESNIL SAINT DENIS CEDEX (FR); JOUANNY, Philippe, 78322 LE MESNIL SAINT DENIS CEDEX (FR)
(74) Mandataire: Valeo Powertrain Systems
(86) Numéro de dépôt international: PCT/FR2019/050084
(87) Numéro de publication internationale: WO 2019/141938

(56) Documents cités:
- EP-A1- 0 352 158
- EP-A2- 2 682 705
- WO-A1-03/106910
- WO-A1-2015/180661
- FR-A1- 2 682 160

## Description

Le domaine de la présente invention est celui des ensembles de refroidissement, notamment pour des véhicules mus au moins en partie par un moteur électrique.

Il est connu de prévoir dans les véhicules automobiles différents circuits de fluide réfrigérant ou caloporteur pour réaliser le refroidissement de différents composants du véhicule et notamment le moteur. Par ailleurs, les véhicules sont couramment équipés d'un circuit de fluide réfrigérant configuré pour traiter thermiquement un flux d'air envoyé dans l'habitacle du véhicule équipé d'un tel circuit.

Le document EP0352158A1 divulgue un système de refroidissement selon l'art antérieur comprenant un échangeur de chaleur pour trois circuits de refroidissement de fluide caloporteur comprenant un circuit de refroidissement d'un moteur, un circuit de refroidissement d'un refroidisseur d'huile et un circuit de refroidissement d'un refroidisseur d'air de suralimentation.

Dans le cas d'un véhicule mû au moins en partie par un moteur électrique, il est connu de mettre en œuvre un circuit spécifique pour le refroidissement d'un dispositif de stockage électrique du véhicule, ce dernier étant utilisé pour fournir une énergie au moteur électrique capable de mettre en mouvement le véhicule. Plus particulièrement, il est connu de prévoir un échangeur thermique commun au circuit de fluide réfrigérant précédemment décrit et à un circuit de fluide caloporteur pour le refroidissement du dispositif de stockage électrique, pour utiliser les frigories du fluide réfrigérant pour refroidir le dispositif de stockage électrique, notamment pendant son utilisation en phase de roulage ou la phase de recharge du dispositif de stockage électrique. Le circuit de fluide réfrigérant est ainsi dimensionné pour refroidir ce dispositif de stockage électrique pour des températures qui restent modérées.

Il résulte de ceci qu'une pluralité de circuits de fluide sont à prévoir dans le véhicule automobile, et notamment dans un contexte de véhicule électrique où la place pour loger les différents composants de l'ensemble moteur et des ensembles de refroidissement est réduite, notamment du fait de l'implantation éventuelle d'un compartiment à bagages dans le bloc avant du véhicule.

Le problème technique réside donc dans la capacité d'intégrer dans un espace réduit des composants participant au traitement thermique de l'habitacle, au refroidissement du dispositif de stockage électrique et au refroidissement du moteur et de ses composants électroniques de commande.

Dans ce contexte, l'invention concerne un ensemble de refroidissement selon la revendication 1.

Selon l'invention, l'échangeur de chaleur comporte deux tubulures d'entrée agencées sur la première boite collectrice de part et d'autre de la première paroi de compartimentation, et trois tubulures de sortie agencées sur la deuxième boite collectrice, une tubulure de sortie étant agencée d'un côté de la deuxième paroi de compartimentation dans la première zone d'échange de chaleur et deux tubulures de sortie étant agencées de l'autre côté de la deuxième paroi de compartimentation dans la deuxième zone d'échange de chaleur.

La première zone d'échange de chaleur est disposée sur une branche d'un circuit de fluide caloporteur pour le refroidissement du dispositif de stockage électrique qui est en parallèle d'un échangeur thermique commun à ce circuit de fluide caloporteur et à un circuit de fluide réfrigérant de traitement thermique de l'habitacle.

La deuxième zone d'échange de chaleur est disposée sur une boucle de refroidissement d'un moteur et d'une électronique moteur.

La première et la deuxième zone d'échange de chaleur sont disposées côte à côte et elles comportent chacune une partie de la première boite collectrice, une partie des tubes ou plaques du faisceau, et une partie de la deuxième boîte collectrice. Les tubes ou plaques du faisceau sont intégralement répartis entre la première zone d'échange de chaleur et la deuxième zone d'échange de chaleur.

Selon une caractéristique de l'invention, la première et la deuxième boîte collectrice comportent en outre chacune au moins une paroi de segmentation agencée en travers de la boîte collectrice correspondante, lesdites parois de segmentation étant décalées dans la direction d'empilement des tubes ou plaques de manière à définir plusieurs passes de circulation de fluide à l'intérieur de la deuxième zone d'échange de chaleur.

Selon une autre caractéristique de l'invention, les deux tubulures de sortie agencées sur la deuxième boîte collectrice du même côté de la deuxième paroi de compartimentation dans la deuxième zone d'échange de chaleur sont séparées par au moins une paroi de segmentation.

Dans ce contexte, il peut être prévu que deux parois de segmentation agencées respectivement en travers de la première et la deuxième boite collectrice participent à définir une portion de circulation directe, ou portion de circulation en I, du fluide dans laquelle le fluide circule dans un unique sens depuis la tubulure d'entrée de la deuxième zone d'échange de chaleur jusqu'à une tubulure de sortie et une portion de circulation indirecte, ou portion de circulation en U, du fluide dans laquelle le fluide circule successivement dans les deux sens entre la première boîte collectrice et la deuxième boîte collectrice depuis la tubulure d'entrée de la deuxième zone d'échange de chaleur jusqu'à une autre tubulure de sortie.

Les parois de segmentation agencées en travers des boites collectrices dans la deuxième zone d'échange de chaleur pour définir lesdites deux portions de circulation directe et indirecte peuvent être disposées de manière à être décentrées par rapport à ladite deuxième zone d'échange de chaleur. De la sorte, une majorité de tubes ou plaques est associée à la portion de circulation directe, ou portion de circulation en I, du fluide.

Selon une caractéristique de l'invention, les parois de compartimentation peuvent être agencées en travers des boîtes collectrices de manière décentrée par rapport à l'échangeur de chaleur, de sorte que la deuxième zone d'échange de chaleur est plus grande que la première zone d'échange de chaleur.

Selon une caractéristique de l'invention, la deuxième zone d'échange de chaleur peut être configurée de sorte que la portion de circulation indirecte soit disposée entre la première zone d'échange de chaleur et la portion de circulation directe de la deuxième zone d'échange de chaleur. De la sorte, on génère un gradient de température d'un bord d'extrémité à l'autre de l'échangeur dans la direction d'empilement des tubes ou plaques, avec une disposition successive des zones de plus en plus chaudes, ce qui permet d'éviter la formation de choc ou contrainte thermique au sein de l'échangeur de chaleur.

Selon une série de caractéristiques de l'invention, on peut prévoir que des moyens de communication fluidique sont agencés entre la première zone d'échange de chaleur et la deuxième zone d'échange de chaleur, et que :
- les moyens de communication fluidique sont agencés de manière à permettre le passage du fluide depuis la deuxième zone d'échange de chaleur vers la première zone d'échange de chaleur,
- les moyens de communication fluidique sont agencés de manière à permettre le passage du fluide depuis la deuxième zone d'échange de chaleur vers la première zone d'échange de chaleur au niveau de la première boite collectrice, et de manière à permettre le passage du fluide depuis la première zone d'échange de chaleur vers la deuxième zone d'échange de chaleur au niveau de la deuxième boite collectrice.

Les moyens de communication peuvent être des moyens de communication fluidique internes, pouvant consister notamment en des parois de communication mobiles, ou des moyens de communication fluidique externes, pouvant consister en des tubes faisant communiquer les deux parties d'une même boîte collectrice de part et d'autre d'une paroi de communication fixe.

Dans le cas où des moyens de communication fluidique sont agencés dans ou sur les boites collectrices de l'échangeur de chaleur, la deuxième zone d'échange de chaleur peut être configurée de sorte que la portion de circulation directe soit disposée entre la première zone d'échange de chaleur et la portion de circulation indirecte de la deuxième zone d'échange de chaleur. De la sorte, on facilite le passage de fluide depuis la deuxième zone d'échange de chaleur vers la première zone d'échange de chaleur, étant entendu qu'il est recherché dans ce cas d'augmenter la surface d'échange de chaleur de la portion de circulation directe, associée au refroidissement du moteur électrique, cette communication se faisant lorsque la première zone d'échange de chaleur est inusitée, c'est-à-dire lorsqu'aucun fluide caloporteur ne traverse cette première zone d'échange de chaleur, par exemple lorsque de hautes températures d'air passant dans l'échangeur thermique sont constatées, lesquelles hautes températures sont incompatibles avec le refroidissement d'un fluide caloporteur basse température.

L'ensemble de refroidissement est tel que le circuit de refroidissement du moteur électrique et de ses composants électroniques de commande comporte deux boucles de circuits en parallèles reliées respectivement au moteur électrique et aux composants électroniques de commande du moteur, lesdites deux boucles comportant :
une première boucle sur laquelle est disposé le moteur électrique et qui est agencée entre la tubulure d'entrée et la tubulure de sortie correspondant à la portion de circulation directe de la deuxième zone d'échange de chaleur et
une deuxième boucle sur laquelle sont disposés les composants électroniques et qui est agencée entre la tubulure d'entrée et la tubulure de sortie correspondant à la portion de circulation indirecte de la deuxième zone d'échange de chaleur.

Il convient de noter que l'ensemble de refroidissement et l'échangeur de chaleur tels qu'ils viennent d'être décrits sont particulièrement intéressants dans la mesure où le dispositif de stockage électrique doit être rechargé. Il est connu de charger le dispositif de stockage électrique du véhicule en le raccordant pendant plusieurs heures au réseau électrique domestique et cette technique de charge permet de maintenir la température du dispositif de stockage électrique en dessous d'un certain seuil, ce qui permet de se passer de tout système de refroidissement du dispositif de stockage électrique. Toutefois, une nouvelle technique de charge a fait son apparition récemment, visant à charger le dispositif de stockage électrique en un temps maximum de quinze à trente minutes. Elle consiste à charger le dispositif de stockage électrique sous une tension et un ampérage élevés. Cette charge rapide implique un échauffement du dispositif de stockage électrique qu'il convient de traiter. Par ailleurs, il faut considérer la possibilité que les occupants du véhicule restent à l'intérieur de celui-ci pendant tout ou partie du temps de charge mentionné ci-dessus. Il faut alors également traiter thermiquement l'habitacle pendant cette charge rapide, pour maintenir des conditions de confort acceptables par les occupants, notamment quand la température extérieure au véhicule dépasse 35°C. Ces deux demandes en refroidissement impliquent un dimensionnement du système qui le rend peu compatible avec les contraintes des véhicules automobiles actuels.

Les aspects de l'invention précédemment décrits permettent d'avoir un ensemble de refroidissement compact qui permet malgré cette compacité une grande efficacité dans le traitement thermique de chacun des composants à refroidir, aussi bien dans un mode de roulage normal que dans une opération de charge rapide.

L'invention concerne également un procédé de commande d'un ensemble de refroidissement d'un véhicule mû au moins partiellement par un moteur électrique selon la revendication 13.

D'autres caractéristiques, détails et avantages de l'invention ressortiront plus clairement à la lecture de la description donnée ci-après à titre indicatif en relation avec des figures dans lesquelles :

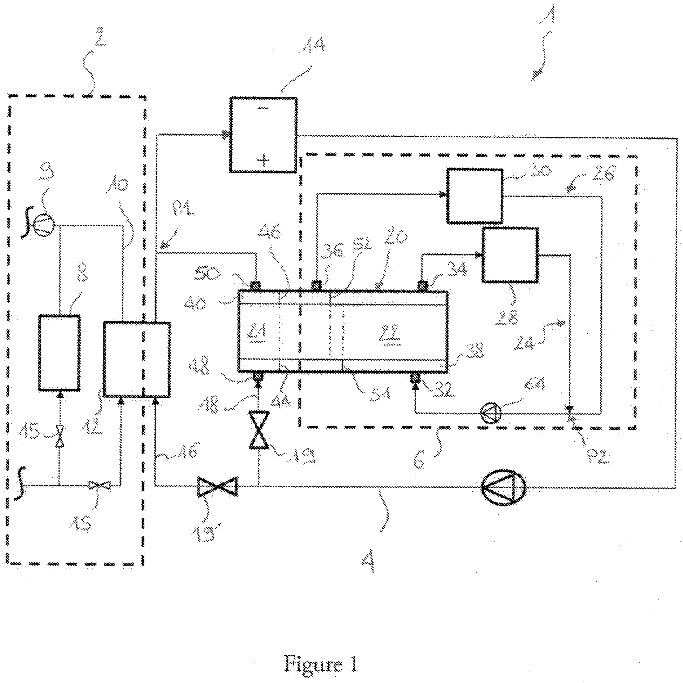

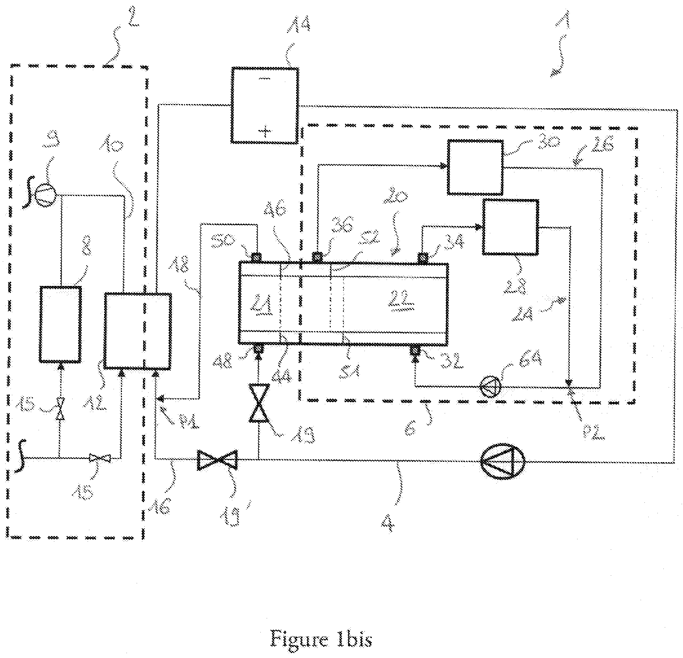

- la figure 1 illustre une représentation schématique d'un ensemble de refroidissement d'un véhicule mû au moins en partie par un moteur électrique, dont l'énergie est fournie par un dispositif de stockage électrique, ledit ensemble comportant au moins un circuit de fluide réfrigérant destiné à traiter thermiquement l'habitacle du véhicule automobile, un circuit de fluide caloporteur pour le refroidissement d'un module de stockage électrique et un circuit de refroidissement d'un moteur électrique et de ses composants électroniques de commande,
- la figure 1bis illustre une représentation schématique d'un ensemble de refroidissement d'un véhicule selon une alternative de réalisation à la figure 1, hors de la porté des revendications,
- la figure 2 illustre une représentation schématique d'un premier mode de réalisation d'un échangeur de chaleur susceptible d'être disposé dans l'ensemble de refroidissement de la figure 1,
- la figure 3 est une représentation schématique du circuit de refroidissement d'un moteur électrique et de ses composants électroniques de commande conforme à celui disposé dans l'ensemble de refroidissement illustré sur la figure 1,
- les figures 4 à 6 illustrent des premiers exemples d'un échangeur de chaleur selon un deuxième mode de réalisation de l'échangeur de chaleur, dans lesquels des moyens de communication fluidique externe sont agencés entre deux zones d'échange de chaleur de cet échangeur de chaleur,
- la figure 7 illustre un autre exemple de l'échangeur de chaleur selon le deuxième mode de réalisation, dans lequel les moyens de communication fluidique sont là aussi externes à l'échangeur de chaleur, mais avec un agencement différent des zones d'échange de chaleur les unes par rapport aux autres, le faisceau de tubes ou de plaques de l'échangeur de chaleur n'étant pas illustré sur cette figure,
- et la figure 8 illustre une variante de l'échangeur de chaleur selon le deuxième mode de réalisation, dans lequel les moyens de communication fluidique sont internes à l'échangeur de chaleur, le faisceau de tubes ou de plaques de l'échangeur de chaleur n'étant pas illustré sur cette figure.

Dans la suite de la description, et notamment dans la description de l'échangeur de chaleur, on adoptera à titre non limitatif des orientations longitudinale L, parallèle à la direction principale d'écoulement de l'air à travers l'échangeur de chaleur, verticale V, parallèle à la direction principale d'allongement de chacun des tubes ou plaques ménagés dans l'échangeur de chaleur, et transversale T, parallèle à la direction d'empilement les uns sur les autres des tubes ou plaques du faisceau de l'échangeur de chaleur.

Tel que cela a pu être précisé précédemment, l'invention concerne un ensemble de refroidissement d'un véhicule mû au moins en partie par un moteur électrique, tel qu'un véhicule électrique ou un véhicule hybride par exemple, dont l'énergie est fournie par un dispositif de stockage électrique et elle concerne selon un autre aspect un échangeur de chaleur susceptible d'équiper avantageusement un tel ensemble de refroidissement.

Un ensemble de refroidissement 1 selon un mode de réalisation de l'invention est illustré sur la figure 1.

L'ensemble de refroidissement comporte au moins un circuit de fluide réfrigérant 2 destiné à traiter thermiquement un habitacle du véhicule automobile, un circuit de fluide caloporteur 4 pour le refroidissement d'un module de stockage électrique et un circuit de refroidissement 6 d'un moteur électrique et de ses composants électroniques de commande.

On entend par « composants électroniques de commande » tout composant électronique pouvant contribuer à la gestion du moteur électrique, tels que des composants électroniques de puissance et de contrôle.

Le circuit de fluide réfrigérant 2, aussi nommée « boucle de climatisation » ci-après, est ici représenté partiellement, étant entendu qu'il peut présenter différents agencements sans que cela sorte du contexte de l'invention. Il convient de noter que ce circuit de fluide réfrigérant est destiné à traiter thermiquement l'habitacle via un organe d'échange thermique 8 traversé par le fluide réfrigérant apte à échanger des calories avec un flux d'air à refroidir avant son passage dans l'habitacle. Ce circuit de fluide réfrigérant peut comprendre tout composant utile au fonctionnement d'une boucle de climatisation de véhicule automobile. Par exemple, un compresseur 9 est piloté pour modifier la pression du fluide réfrigérant et des organes de détente 15 sont prévus sur différentes branches du circuit de fluide réfrigérant 2.

Tel qu'illustré, le circuit de fluide réfrigérant 2 comprend une branche 10, agencée en parallèle de la branche sur laquelle est agencé l'organe d'échange thermique 8, qui comporte un échangeur thermique fluide-fluide 12 commun au circuit de fluide caloporteur 4 pour le refroidissement d'un dispositif de stockage électrique 14, le fluide réfrigérant et le fluide caloporteur étant destiné à traverser respectivement l'échangeur thermique commun 12.

Le circuit de fluide caloporteur 4 pour le refroidissement du dispositif de stockage électrique comporte une première branche 16 et une deuxième branche 18 agencées en parallèle, la première branche comprenant dans l'exemple illustré sur la figure 1 l'échangeur thermique fluide-fluide 12 commun au circuit de fluide caloporteur 4 et au circuit de fluide réfrigérant 2 destiné à traiter thermiquement l'habitacle du véhicule automobile. Le raccordement des deux branches 16, 18 agencées en parallèle est ici tel que le point de convergence P1 des branches est situé en aval de l'échangeur thermique fluide-fluide 12 commun au circuit de fluide caloporteur 4 et au circuit de fluide réfrigérant 2 par rapport au sens de circulation du fluide caloporteur.

Le dispositif de stockage électrique 14 est constitué d'une pluralité de cellules électriques conditionnées ensemble en un pack de batteries électriques, ce dispositif de stockage électrique étant configuré pour être traversé par le fluide caloporteur 4 qui vient d'être refroidi au préalable par exemple par son passage à travers l'échangeur thermique fluide-fluide 12, qui permet un échange de calories entre le fluide réfrigérant du circuit permettant le traitement thermique de l'habitacle et ce fluide caloporteur.

La deuxième branche 18 forme une branche de dérivation en parallèle de l'échangeur thermique fluide-fluide 12 et un échangeur de chaleur 20 selon un aspect de l'invention est ménagé sur cette branche de dérivation 18.

Des vannes de dérivation 19, 19' sont ménagées sur chacune des première 16 et deuxième 18 branche pour piloter le passage de fluide caloporteur dans la deuxième branche en fonction de conditions de fonctionnement du véhicule déterminées.

La branche de dérivation est ainsi agencée pour pouvoir réaliser un by-pass de l'échangeur thermique fluide-fluide 12 tout en assurant le refroidissement du dispositif de stockage électrique lorsque les conditions de fonctionnement le permettent. On peut comprendre qu'une vanne 3-voies aurait pu être disposée au point de divergence des première et deuxième branches pour réaliser et piloter ce by-pass sans sortir du contexte de l'invention.

A titre d'exemple, lorsque l'air ambiant est suffisamment frais, par exemple à une température inférieure à 35°C, la vanne de dérivation 19 ménagée sur la deuxième branche 18 peut être ouverte de telle sorte que l'échangeur de chaleur 20 puisse contribuer à refroidir le liquide caloporteur qui circule en direction du dispositif de stockage électrique 14. En revanche, lorsque la température ambiante est trop élevée, par exemple à une température supérieure à 40°, la vanne de dérivation 19 ménagée sur la deuxième branche 18 est fermée et la vanne de dérivation 19' ménagée sur la première branche 16 est ouverte, de sorte à pouvoir réaliser un by-pass de l'échangeur thermique 20, et de sorte que ce soit l'échangeur thermique fluide-fluide 12 commun au circuit de fluide caloporteur 4 et à la boucle de climatisation 2 refroidisse le liquide caloporteur qui circule en direction du dispositif de stockage électrique 14.

L'échangeur de chaleur 20 est configuré de manière à former deux zones d'échange de chaleur 21, 22 avec une première zone d'échange de chaleur 21 qui est agencée plus spécifiquement sur la branche de dérivation 18 et avec une deuxième zone d'échange de chaleur 22 qui est agencée sur le circuit de refroidissement 6 d'un moteur électrique et de ses composants électroniques de commande.

On va décrire plus en détails ci-après l'échangeur de chaleur et le circuit de refroidissement 6 du moteur électrique et de ses composants électroniques de commande.

Une alternative non couverte par les revendications est illustrée à la figure 1bis.

Cette alternative se distingue notamment de ce qui précède par le raccordement des deux branches 16, 18 agencées en parallèle, le point de convergence P1 des branches étant ici en amont de l'échangeur thermique fluide-fluide 12 commun au circuit de fluide caloporteur 4 et au circuit de fluide réfrigérant 2 par rapport au sens de circulation du fluide caloporteur. Conformément à ce qui précède, l'échangeur de chaleur 20 est agencé sur la deuxième branche 18 de manière à ce que la deuxième branche communique avec la première zone d'échange de chaleur 21 de cet échangeur de chaleur. Dans cette alternative, l'échangeur thermique fluide/fluide 12 est agencé sur le circuit de fluide caloporteur 4 en aval de la première branche 16, qui est configurée pour former une dérivation parallèle à la deuxième branche de sorte à circuler directement vers l'échangeur thermique fluide/fluide en contournant l'échangeur de chaleur 20. Comme précédemment, les vannes de dérivation agencées sur les deux branches en parallèle sont commandées pour piloter la circulation de fluide caloporteur, ici de manière à ce que le fluide caloporteur passe soit directement par l'échangeur thermique fluide/fluide en évitant l'échangeur de chaleur, soit à travers successivement l'échangeur de chaleur puis l'échangeur thermique fluide/fluide.

Tel que cela est illustré aussi bien sur les figures 1 et 1bis, le circuit de refroidissement 6 du moteur électrique et de ses composants électroniques de commande comporte deux boucles 24, 26 de circuits en parallèles reliées respectivement au moteur électrique et aux composants électroniques de commande du moteur.

Une première boucle 24 comporte le moteur électrique 28 et une deuxième boucle 26 comporte les composants électroniques 30 de commande du moteur.

Ces deux boucles débouchent sur une tubulure d'entrée 32 de la deuxième zone d'échange de chaleur 22 et chaque boucle 24, 26 est issue d'une tubulure de sortie 34, 36 spécifique de cette deuxième zone d'échange de chaleur 22.

On comprend que, tel que cela va être décrit ci-après, l'échangeur de chaleur 20 selon un aspect de l'invention comporte deux zones d'échange de chaleur 21, 22 avec la première zone d'échange de chaleur 21 qui comporte une entrée et une sortie de fluide propres à cette première zone et par lesquelles passe le fluide caloporteur apte à refroidir le module de stockage électrique, et avec la deuxième zone d'échange de chaleur 22 qui comporte une entrée et deux sorties de fluide propres à cette deuxième zone et par lesquelles passe un fluide de refroidissement apte à refroidir le moteur et les composants électroniques selon la boucle dans laquelle il circule.

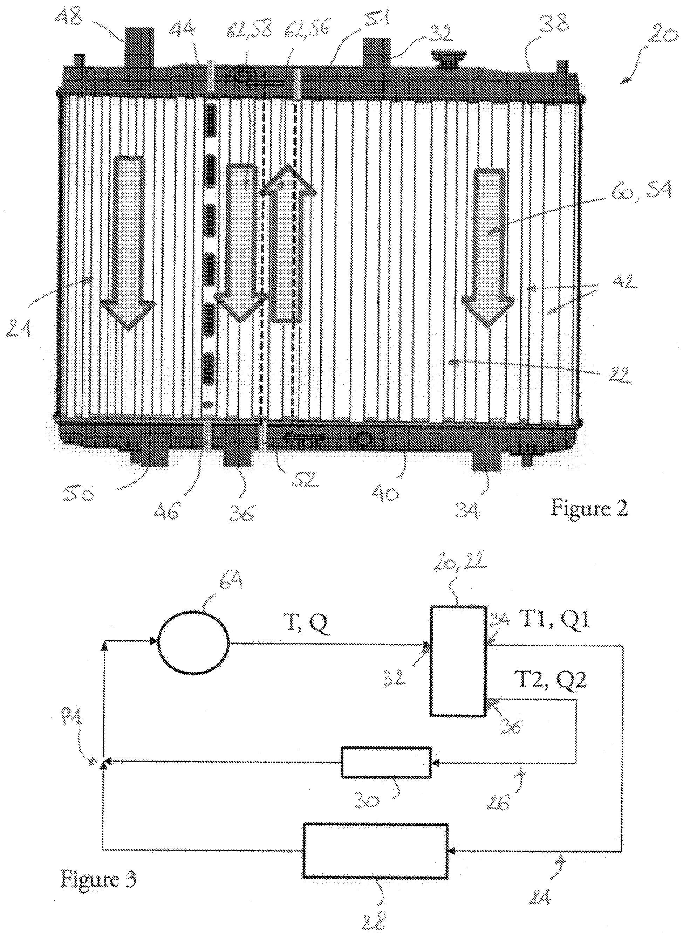

On va maintenant décrire plus en détail l'échangeur de chaleur selon un aspect de l'invention, en se référant à la figure 1 illustrant schématiquement cet échangeur dans un exemple d'implantation dans un ensemble de refroidissement et en se référant dans un premier temps à la figure 2 illustrant un premier mode de réalisation de cet échangeur de chaleur.

L'échangeur de chaleur 20 comporte une première boite collectrice 38, une deuxième boîte collectrice 40, et un faisceau de tubes 42 ou de plaques empilé(e)s les un(e)s sur les autres, les tubes ou plaques étant agencé(e)s entre les boites collectrices en étant relié(e)s de façon fluidique à chacune de ces boites. Dans ce qui va suivre, on décrira plus particulièrement un faisceau de tubes étant entendu que d'autres moyens de guidage du fluide d'une boite collectrice à l'autre tels que des plaques pourraient être prévus sans sortir du contexte de l'invention.

L'échangeur de chaleur 20 comporte des parois de compartimentation 44, 46 qui sont agencées en travers des boîtes collectrices 38, 40 pour définir les zones d'échange de chaleur 21, 22 tels que précédemment définis.

Plus particulièrement, une première paroi de compartimentation 44 est agencée en travers de la première boîte collectrice 38 et une deuxième paroi de compartimentation 46 est agencée en travers de la deuxième boîte collectrice 40, avec les parois de compartimentation qui sont alignées verticalement, c'est-à-dire selon la direction d'allongement de chacun des tubes ou plaques, de manière à définir dans l'échangeur de chaleur la première zone d'échange de chaleur 21, disposée sur une branche 18 du circuit de fluide caloporteur 2 ici en parallèle de l'échangeur thermique fluide-fluide 12 commun au circuit de fluide réfrigérant pour le traitement thermique de l'habitacle et au circuit de fluide caloporteur pour le refroidissement du dispositif de stockage électrique, et la deuxième zone d'échange de chaleur 22 disposée sur le circuit de refroidissement 6 d'un moteur et d'une électronique moteur.

La disposition des parois de compartimentation 44, 46 alignées sur un axe vertical parallèle à la direction d'allongement des tubes 42 permet de différencier la circulation d'un premier fluide entre un bord d'extrémité latéral de l'échangeur de chaleur et un premier tube disposé immédiatement au voisinage des parois de compartimentation et la circulation d'un deuxième fluide entre le bord d'extrémité latéral opposé de l'échangeur de chaleur et un deuxième tube voisin du premier tube décrit précédemment et disposé lui aussi immédiatement au voisinage des parois de compartimentation. On comprend que le premier fluide passant d'un côté de la première paroi de compartimentation 44 traverse l'échangeur en direction de la deuxième boite collectrice 40 uniquement par les tubes qui sont agencés de ce côté de la première paroi, et que ce premier fluide en sortie de ces tubes est collecté dans la deuxième boite collectrice 40 du même côté de la deuxième paroi de compartimentation 46. Le premier fluide suit ce chemin et définit ainsi la première zone d'échange de chaleur 21 et le deuxième fluide circule de l'autre côté des parois de compartimentation pour définir la deuxième zone d'échange de chaleur 22.

Il résulte de ce qui précède que la première et la deuxième zone d'échange de chaleur, disposées côte à côte de part et d'autre des parois de compartimentation 44, 46, comportent chacune une partie de la première boite collectrice, une partie des tubes ou plaques du faisceau, et une partie de la deuxième boîte collectrice.

Tel que cela est visible sur les figures, les parois de compartimentation 44, 46 sont agencées en travers des boîtes collectrices de manière décentrée par rapport à la dimension transversale de l'échangeur de chaleur, de sorte que la deuxième zone d'échange de chaleur 22 est plus grande que la première zone d'échange de chaleur 21.

Tel que cela est particulièrement visible sur les figures, la première et la deuxième zone d'échange de chaleur, susceptibles d'être traversées par un fluide respectif à savoir un fluide caloporteur pour le refroidissement du dispositif de stockage thermique 14 et un fluide de refroidissement du moteur et de ses composants électroniques, sont formés dans un ensemble monobloc d'un échangeur de chaleur 20, l'intégralité des tubes 42 ou plaques du faisceau de cet échangeur de chaleur étant répartis entre la première zone d'échange de chaleur 21 et la deuxième zone d'échange de chaleur 22.

L'échangeur de chaleur 20 comporte deux tubulures d'entrée 32, 48 agencées sur la première boite collectrice 38 et trois tubulures de sortie agencées sur la deuxième boîte collectrice.

Plus particulièrement, les deux tubulures d'entrée 32, 48 sont agencées sur la première boite collectrice de part et d'autre de la première paroi de compartimentation 44, de sorte qu'une première tubulure d'entrée 48 permet l'arrivée du fluide caloporteur dans la première zone d'échange de chaleur 21 et qu'une deuxième tubulure d'entrée 38 permet l'arrivée d'un deuxième fluide dans la deuxième zone d'échange de chaleur 22. Et les trois tubulures de sortie sont agencées sur la deuxième boite collectrice, de sorte qu'une première tubulure de sortie 50 est agencée d'un côté de la deuxième paroi de compartimentation dans la première zone d'échange de chaleur 21 et deux tubulures de sortie 34, 36 sont agencées de l'autre côté de la deuxième paroi de compartimentation 46 dans la deuxième zone d'échange de chaleur 22.

L'échangeur de chaleur 20 est configuré de sorte qu'au moins une zone d'échange de chaleur, ici la deuxième zone d'échange de chaleur 22, est spécifique en ce que les portions de la première et de la deuxième boîte collectrice de cette zone d'échange de chaleur comportent chacune au moins une paroi de segmentation 51, 52 agencée en travers de la boîte collectrice correspondante et distincte de la paroi de compartimentation 44, 46 décrite précédemment. La présence de ces parois de segmentation 51, 52 permet de réaliser plusieurs passes 54, 56, 58 de circulation du fluide à travers la zone d'échange de chaleur dans laquelle sont agencées les parois de segmentation.

A cet effet, la paroi de segmentation 51 agencée dans une première boîte collectrice 38 et la paroi de segmentation 52 agencée dans la deuxième boîte collectrice 40 sont décalées l'une par rapport à l'autre dans la direction transversale d'empilement des tubes 42 ou plaques.

Les parois de segmentation 51, 52 agencées en travers des portions de boites collectrices associées à la deuxième zone d'échange de chaleur 22 divisent ces boîtes collectrices en deux. Elles sont disposées de manière à être décentrées par rapport à ladite deuxième zone d'échange de chaleur 22, c'est-à-dire en étant plus près d'une extrémité latérale de la deuxième zone d'échange de chaleur que l'extrémité latérale opposée de cette deuxième zone.

Les deux tubulures de sortie 34, 36 agencées sur la portion de la deuxième boîte collectrice 40 du même côté de la deuxième paroi de compartimentation 46, c'est-à-dire ici les deux tubulures de sortie agencées dans la deuxième zone d'échange de chaleur 22, sont séparées par au moins une paroi de segmentation 52.

Tel que cela a été précisé précédemment, les parois de segmentation 51, 52 participent à définir trois passes 54, 56, 58 de circulation du fluide et plus particulièrement une portion de circulation directe 60, ou portion de circulation en I, du fluide dans laquelle le fluide circule dans un unique sens depuis la tubulure d'entrée 32 jusqu'à une tubulure de sortie, selon une unique passe 54, et une portion de circulation indirecte 62, ou portion de circulation en U, du fluide dans laquelle le fluide circule successivement dans les deux sens entre la première boîte collectrice et la deuxième boîte collectrice, selon deux passes opposées 56, 58. Une des deux tubulures de sortie associées à la deuxième zone d'échange de chaleur 22, dite deuxième tubulure de sortie 34, est ménagée sur la portion de circulation directe 60, ou portion de circulation en I, et l'autre de ces deux tubulures de sortie, dite troisième tubulure de sortie 36, est ménagée sur la portion de circulation indirecte 62, ou portion de circulation en U.

La circulation de fluide dans cette deuxième zone d'échange de chaleur 22 est notamment illustrée sur les figures 2 et 3.

Après son entrée dans la boîte collectrice, le fluide circulant dans la deuxième zone d'échange de chaleur 22 parcourt d'abord la première passe 54, correspondant à la portion de circulation directe 60, ou portion de circulation en I, en direction de la deuxième tubulure de sortie 34 ménagée dans cette portion de circulation directe. Une majeure partie du fluide sort par cette deuxième tubulure de sortie 34 après une unique passe et une partie mineure de fluide passe dans la portion de circulation indirecte 62, ou portion de circulation en U, de manière plus longuement à l'intérieur de l'échangeur de chaleur, en plusieurs passes 56, 58 entre les deux boites collectrices.

Le diamètre de cette deuxième tubulure de sortie 34 et la répartition des tubes 42 entre la portion de circulation directe 60 et la portion de circulation indirecte 62 permet de dimensionner la quantité de fluide sortant de l'échangeur en une seule passe et la quantité de fluide qui continue à circuler dans l'échangeur de chaleur via la portion de circulation indirecte.

A titre d'exemple, on vise à ce que 50 à 90% du fluide entrant par la tubulure d'entrée 32 de la deuxième zone d'échange de chaleur 22 sorte par la deuxième tubulure de sortie 34 associée à cette portion de circulation de fluide directe.

On comprend de cet agencement de la deuxième zone de chaleur 22 que le fluide sortant par chacune des deux tubulures de sortie présente une température différente et un débit différent, étant entendu que la pression du fluide sur l'ensemble du circuit de refroidissement 6 du moteur électrique et de ses composants électroniques de commande se stabilise à une valeur constante quelle que soit la boucle.

Plus particulièrement, le fluide sortant de la deuxième zone d'échange thermique 22 après une unique passe présente en sortie une première température T1 et le fluide sortant de cette deuxième zone d'échange thermique 22 après trois passes présente en sortie une deuxième température T2. On comprend que le fluide sortant après trois passes est resté plus longtemps dans l'échangeur thermique et échange plus de calories au cours de son passage dans l'échangeur thermique, et donc que la première température T1 présente une valeur supérieure à la valeur de la deuxième température T2.

Le fluide sortant de la deuxième zone d'échange de chaleur 22 après une passe unique circule dans la première boucle 24 sur laquelle est disposée le moteur électrique 28. Le fluide dans cette première boucle 24 présente une première température T1 et un premier débit Q1.

Le fluide sortant de la deuxième zone d'échange de chaleur après trois passes circule dans la deuxième boucle 26 sur laquelle sont disposés les composants électroniques de commande 30. Le fluide dans cette deuxième boucle 26 présente une deuxième température T2 et un deuxième débit Q2.

La circulation directe ou indirecte du fluide à travers la deuxième zone d'échange de chaleur implique des températures et des débits de fluide différents dans les première et deuxième boucles.

Plus particulièrement, le fluide circulant dans la première boucle 24 est passé à travers la deuxième zone d'échange de chaleur 22 dans la portion de circulation directe 60 à une passe et présente une première température T1 et un premier débit Q1 de valeurs respectives supérieures aux valeurs de la deuxième température T2 et du deuxième débit Q2 du fluide circulant dans la deuxième boucle 26 passant à travers la deuxième zone d'échange de chaleur dans la portion de circulation indirecte 62 à trois passes.

Il est particulièrement avantageux selon l'invention de disposer le moteur électrique 28 sur la première boucle 24 car le moteur a besoin de beaucoup de débit de fluide caloporteur pour évacuer une quantité de chaleur de fonctionnement plus importante et est peu sensible aux hautes températures.

Et il est particulièrement avantageux selon l'invention de disposer les composants électroniques 30 de commande du moteur sur la deuxième boucle 26 car ces composants électroniques ont une charge thermique plus faible, c'est à dire moins de chaleur à évacuer, et ont donc besoin de moins de débit de fluide caloporteur tout en étant plus sensibles aux hautes températures.

A titre d'exemple non limitatif, le fluide circulant dans la première boucle 24 présente une première température T1 de valeur sensiblement égale à 59°C en entrée des composants électroniques de commande et un premier débit Q1 de valeur sensiblement égale à 11L/min, tandis que le fluide circulant dans la deuxième boucle 26 présente une deuxième température T2 de valeur sensiblement égale à 55°C en entrée du moteur électrique et un deuxième débit Q2 de valeur sensiblement égale à 1L/min.

Tel que cela est visible sur les figures 1 et 2, l'échangeur de chaleur 20 est dans ce premier mode de réalisation configuré de sorte que la portion de circulation indirecte 62 ménagée dans la deuxième zone d'échange de chaleur 22 est disposée entre la première zone d'échange de chaleur 21 et la portion de circulation directe 60 ménagée dans la deuxième zone d'échange de chaleur 22.

De la sorte, on génère un gradient de température régulier d'un bord d'extrémité latéral à l'autre de l'échangeur, c'est-à-dire dans la direction d'empilement des tubes ou plaques, avec une disposition successive des zones de plus en plus chaudes, ce qui permet d'éviter la formation de chocs thermiques au sein de l'échangeur de chaleur.

On va maintenant décrire, en se référant à la figure 3, le fonctionnement thermique du circuit de refroidissement 6 du moteur électrique et de ses composants électroniques de commande, sur lequel est disposée la deuxième zone d'échange de chaleur 22 de l'échangeur de chaleur 20 selon l'invention.

Une pompe 64 est commandée pour délivrer du fluide de refroidissement dans la deuxième zone d'échange de chaleur 22 dédiée au refroidissement du moteur électrique 28 et de ses composants électroniques de commande 30. Le fluide de refroidissement, tel que décrit précédemment, sort majoritairement de l'échangeur de chaleur 20 par la deuxième tubulure de sortie 34 après avoir circulé dans la première passe, et une partie mineure de ce fluide circule en trois passes pour sortir par la troisième tubulure de sortie 36.

A titre d'exemple, le fluide de refroidissement est amené à échanger des calories avec de l'air ambiant traversant l'échangeur de chaleur avec une température sensiblement égale à 55°C.

La majeure partie du fluide de refroidissement, sortie par la deuxième tubulure de sortie 34, circule dans la première boucle 24 avec un premier débit Q1 de valeur sensiblement égale ici à 11L/min et traverse alors un canal ménagé à travers ou au contact du moteur électrique 28 pour réaliser son refroidissement. De la sorte, le fluide qui pouvait présenter une température de valeur sensiblement égale à 59°C en entrée du moteur électrique présente après le passage dans ce moteur une température sensiblement égale à 61°C en un point de convergence P2 où les première et deuxième boucles se regroupent.

La partie mineure du fluide de refroidissement, sortie par la troisième tubulure de sortie 36, circule dans la deuxième boucle 26 avec un deuxième débit Q2 de valeur sensiblement égale ici à 1L/min et traverse alors un canal ménagé à travers ou au contact des composants électroniques 30 de commande du moteur électrique pour réaliser leur refroidissement. De la sorte, le fluide qui pouvait présenter une température de valeur sensiblement égale à 55°C en entrée des composants électroniques de commande 30 présente après le passage de ces composants une température sensiblement égale à 56°C en le point de convergence P2 des boucles précédemment décrit.

La température T du fluide, en aval du point de convergence P2 des boucles, présente alors une valeur moyenne ici égale à 60°C. Il convient de noter que dans ce cas, le différentiel de température entre le fluide de refroidissement et l'air ambiant amené à traverser la deuxième zone d'échange de chaleur, de valeur sensiblement égale ici à 55°C, est important et génère une bonne performance thermique dans cette deuxième zone d'échange de chaleur 22.

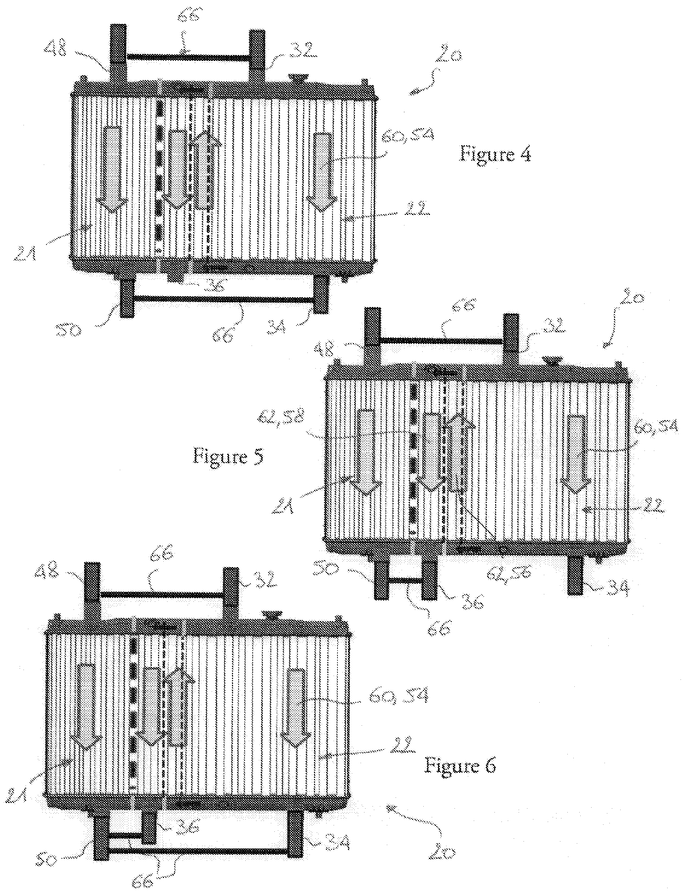

On va maintenant décrire différents exemples d'un deuxième mode deréalisation, en référence aux figures 4 à 8, dans lequel l'échangeur de chaleur 20 comporte des moyens de communication fluidique 66, 68 agencés entre la première zone d'échange de chaleur 21 et la deuxième zone d'échange de chaleur 22.

Les moyens de communication fluidique 66 sont agencés de manière à permettre le passage du fluide depuis la deuxième zone d'échange de chaleur vers la première zone d'échange de chaleur. Plus particulièrement, les moyens de communication fluidique sont agencés de manière à permettre le passage du fluide depuis la deuxième zone d'échange de chaleur vers la première zone d'échange de chaleur au niveau de la première boite collectrice, et de manière à permettre le passage du fluide depuis la première zone d'échange de chaleur vers la deuxième zone d'échange de chaleur au niveau de la deuxième boite collectrice.

Dans les exemples illustrés sur les figures 4 à 7, les moyens de communication sont des moyens de communication fluidique externes 66, qui consistent ici en des flexibles faisant communiquer les deux parties d'une même boîte collectrice 38, 40 de part et d'autre de la paroi de compartimentation.

On a illustré sur les figures 4 à 6 trois exemples de réalisation différant les uns des autres par l'agencement des moyens de communication ménagés au niveau de la deuxième boite collectrice.

Les moyens de communication fluidique ménagés au niveau de la deuxième boite collectrice peuvent ainsi s'étendre depuis la première zone d'échange de chaleur 21 vers la portion de circulation directe 60 (figure 4), afin d'augmenter la surface d'échange de chaleur associée au refroidissement du moteur électrique 28 lorsque le refroidissement du dispositif de stockage électrique 14 n'est pas effectué via l'échangeur de chaleur 20 selon l'invention.

Les moyens de communication ménagés au niveau de la deuxième boite collectrice peuvent s'étendre depuis la première zone d'échange de chaleur 21 vers la portion de circulation indirecte 62 (figure 5), afin d'augmenter la surface d'échange de chaleur associée au refroidissement des composants électroniques de commande 30 du moteur électrique lorsque le refroidissement du dispositif de stockage électrique 14 n'est pas effectué via l'échangeur de chaleur selon l'invention.

Les moyens de communication ménagés au niveau de la deuxième boite collectrice peuvent par ailleurs s'étendre depuis la première zone d'échange de chaleur 21 vers la portion de circulation directe 60 et vers la portion de circulation indirecte 62 (figure 6), afin d'augmenter à la fois la surface d'échange de chaleur associée au refroidissement du moteur électrique et la surface d'échange de chaleur associée au refroidissement des composants électroniques de commande du moteur électrique, là encore lorsque le refroidissement du dispositif de stockage électrique n'est pas effectué via l'échangeur de chaleur selon l'invention.

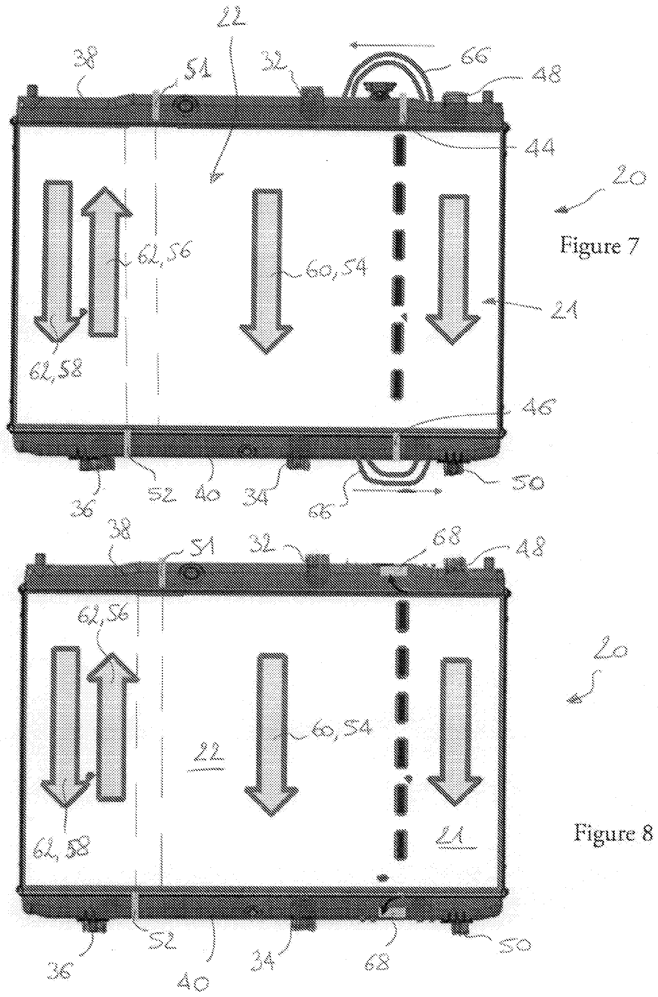

Dans les réalisations illustrées sur les figures 7 et 8, la structure de l'échangeur de chaleur est modifiée par un agencement différent des zones d'échange de chaleur. Plus particulièrement, la deuxième zone d'échange de chaleur 22 est configurée de sorte que la portion de circulation directe 60 soit disposée entre la première zone d'échange de chaleur 21 et la portion de circulation indirecte 62 de la deuxième zone d'échange de chaleur. De la sorte, on facilite le passage de fluide depuis la deuxième zone d'échange de chaleur vers la première zone d'échange de chaleur, étant entendu qu'il est recherché dans ce cas d'augmenter la surface d'échange de chaleur de la portion de circulation directe associée au refroidissement du moteur électrique, cette communication se faisant, tel que cela sera décrit ci-après, lorsque la première zone d'échange de chaleur est inusitée, par exemple lorsque de hautes températures d'air passant dans l'échangeur thermique sont constatées, lesquelles hautes températures sont incompatibles avec le refroidissement d'un fluide caloporteur basse température.

La figure 7 illustre un exemple de réalisation avec des moyens de communication fluidique externes 66, ici ménagés au niveau de la deuxième boite collectrice pour s'étendre depuis la première zone d'échange de chaleur 21 vers la portion de circulation directe 60 (figure 4).

La figure 8 illustre une variante dans laquelle les moyens de communication sont des moyens de communication fluidique internes 68, qui consistent sur l'exemple illustré en des parois de compartimentation mobiles. Ces parois de compartimentation mobiles sont ici mobiles en rotation, avec un actionneur approprié qui permet de faire passer les parois d'une position de blocage du fluide, dans une position en travers de la boite collectrice similaire à la position illustrée sur la figure 2 par exemple, à une position escamotée visible sur la figure 8 dans laquelle le fluide peut circuler librement dans toute la boîte collectrice pour alimenter chacun des tubes du faisceau.

Les moyens de communication fluidique sont commandés selon un procédé particulier formant un aspect de l'invention et permettant la commande notamment de la boucle de refroidissement d'un moteur et de composants électroniques de ce moteur. Ce procédé de commande est mis en œuvre en fonction de conditions de fonctionnement déterminées du véhicule équipé d'un ensemble de refroidissement comportant au moins un circuit de fluide réfrigérant 2 destiné à traiter thermiquement l'habitacle du véhicule automobile, un circuit de fluide caloporteur 4 pour le refroidissement d'un module de stockage électrique et un circuit de refroidissement 6 d'un moteur électrique et de ses composants électroniques de commande.

Lorsque l'air ambiant est chaud, le fluide caloporteur pour le refroidissement du dispositif de stockage électrique est dirigé vers l'échangeur thermique fluide-fluide 12 afin de récupérer des frigories du fluide réfrigérant circulant dans le circuit de fluide réfrigérant et ce fluide caloporteur refroidi participe à refroidir le dispositif de stockage électrique. On comprend que pour refroidir suffisamment le dispositif de stockage électrique, et notamment dans des opérations de rechargement rapide où le fluide réfrigérant doit également participer à refroidir l'air amené à passer dans l'habitacle, il convient de suralimenter le compresseur sur le circuit de fluide réfrigérant.

Lorsque l'air ambiant est suffisamment frais, le seuil pouvant être de l'ordre de 55°C, le fluide caloporteur pour le refroidissement d'un dispositif de stockage électrique est dirigé vers la branche de dérivation 18 pour refroidir le dispositif de stockage électrique sans passer par l'échangeur thermique fluide-fluide 12 et donc sans surconsommer d'énergie pour comprimer le fluide réfrigérant.

Les moyens de communication fluidique prévus dans l'échangeur de chaleur selon le deuxième mode de réalisation de l'échangeur de chaleur décrit précédemment sont utilisés pour laisser passer du fluide de refroidissement depuis la deuxième zone d'échange de chaleur vers la première zone d'échange de chaleur lorsqu'aucun fluide caloporteur ne circule dans la branche de dérivation 18 du circuit de fluide caloporteur 4 sur laquelle est ménagée l'échangeur de chaleur 20, que celui soit en parallèle ou en série de l'échangeur thermique fluide-fluide 12, de manière à profiter de la surface d'échange inusitée de la première zone d'échange de chaleur et de manière à ainsi augmenter la surface d'échange thermique pour le fluide circulant dans le circuit de refroidissement du moteur électrique et de ses composants électroniques de commande.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites de manière isolée des autres caractéristiques décrites, dès lors que, conformément à l'invention, des parois de compartimentation permettent de scinder l'échangeur de chaleur en deux zones distinctes d'échange de chaleur respectivement associées au refroidissement d'un dispositif de stockage électrique et au refroidissement du moteur et des composants électroniques de commande du moteur.

## Revendications

1. Ensemble de refroidissement (1) d'un véhicule mû au moins en partie par un moteur électrique (28), comportant un circuit de fluide réfrigérant (2) destiné à traiter thermiquement l'habitacle du véhicule automobile, un circuit de fluide caloporteur (4) pour le refroidissement d'un dispositif de stockage électrique (14) et un circuit de refroidissement (6) du moteur électrique (28) et de ses composants électroniques de commande (30), comportant un échangeur de chaleur (20) commun au circuit de fluide caloporteur pour le refroidissement du dispositif de stockage électrique et au circuit de refroidissement du moteur électrique et de ses composants électroniques de commande, ledit échangeur de chaleur (20) comportant une première boite collectrice (38), une deuxième boîte collectrice (40), et un faisceau de tubes (42) ou de plaques empilé(e)s les un(e)s sur les autres, les tubes ou plaques étant agencé(e)s entre les boites collectrices en étant relié(e)s de façon fluidique à chacune de ces boites,
ledit échangeur de chaleur (20) comportant
une première paroi de compartimentation (44) agencée en travers de la première boîte collectrice (38) et une deuxième paroi de compartimentation (46) agencée en travers de la deuxième boîte collectrice (40) de manière à définir dans l'échangeur de chaleur une première zone d'échange de chaleur (21) et une deuxième zone d'échange de chaleur (22),
deux tubulures d'entrée (32, 48) agencées sur la première boite collectrice (38) de part et d'autre de la première paroi de compartimentation (44),
et trois tubulures de sortie (34, 36, 50) agencées sur la deuxième boite collectrice (40), une tubulure de sortie (50) étant agencée d'un côté de la deuxième paroi de compartimentation (46) dans la première zone d'échange de chaleur (21) et deux tubulures de sortie (34, 36) étant agencées de l'autre côté de la deuxième paroi de compartimentation (46) dans la deuxième zone d'échange de chaleur (22), le circuit de fluide caloporteur (4) pour le refroidissement du dispositif de stockage électrique (14) comportant une première branche (16) et une deuxième branche (18), la première branche comprenant un échangeur thermique (12) commun au circuit de fluide caloporteur et au circuit de fluide réfrigérant destiné à traiter thermiquement un habitacle du véhicule automobile,
ledit échangeur de chaleur (20) étant agencé sur la deuxième branche (18) de manière à ce que la deuxième branche communique avec la première zone d'échange de chaleur (21) de cet échangeur de chaleur.

2. Ensemble de refroidissement (1) selon la revendication 1, la première et la deuxième boîte collectrice (38, 40) dudit échangeur de chaleur (20) comportant en outre chacune au moins une paroi de segmentation (51, 52) agencée en travers de la boîte collectrice correspondante, lesdites parois de segmentation étant décalées dans la direction d'empilement des tubes (42) ou plaques de manière à définir plusieurs passes (54, 56, 58) de circulation de fluide à l'intérieur de la deuxième zone d'échange de chaleur (22).

3. Ensemble de refroidissement (1) selon l'une quelconque des revendications précédentes, les deux tubulures de sortie (34, 36) agencées sur la deuxième boîte collectrice (40) du même côté de la deuxième paroi de compartimentation dans la deuxième zone d'échange de chaleur (22) étant séparées par au moins une paroi de segmentation (52).

4. Ensemble de refroidissement (1) selon la revendication 2 ou 3, deux parois de segmentation (51, 52) agencées respectivement en travers de la première et la deuxième boite collectrice (38, 40) participant à définir une portion de circulation directe (60) du fluide dans laquelle le fluide circule dans un unique sens depuis la tubulure d'entrée (32) de la deuxième zone d'échange de chaleur jusqu'à une tubulure de sortie (34) et une portion de circulation indirecte (62) du fluide dans laquelle le fluide circule successivement dans les deux sens entre la première boîte collectrice et la deuxième boîte collectrice.

5. Ensemble de refroidissement (1) selon la revendication précédente, les parois de segmentation (51, 52) agencées en travers des boites collectrices (38, 40) dans la deuxième zone d'échange de chaleur (22) pour définir lesdites deux portions de circulation directe (60) et indirecte (62) étant disposées de manière à être décentrées par rapport à ladite deuxième zone d'échange de chaleur.

6. Ensemble de refroidissement (1) selon l'une des revendications précédentes, les parois de compartimentation (44, 46) étant agencées en travers des boîtes collectrices (38, 40) de manière décentrée par rapport à l'échangeur de chaleur, de sorte que la deuxième zone d'échange de chaleur (22) est plus grande que la première zone d'échange de chaleur (21).

7. Ensemble de refroidissement (1) selon l'une des revendications précédentes, des moyens de communication fluidique (66, 68) étant agencés entre la première zone d'échange de chaleur (21) et la deuxième zone d'échange de chaleur (22).

8. Ensemble de refroidissement (1) selon la revendication précédente, les moyens de communication fluidique (66, 68) étant agencés de manière à permettre le passage du fluide depuis la deuxième zone d'échange de chaleur (22) vers la première zone d'échange de chaleur (21).

9. Ensemble de refroidissement (1) selon la revendication 7 ou 8, les moyens de communication fluidique (66, 68) étant agencés de manière à permettre le passage du fluide depuis la deuxième zone d'échange de chaleur (22) vers la première zone d'échange de chaleur (21) au niveau de la première boite collectrice (38), et de manière à permettre le passage du fluide depuis la première zone d'échange de chaleur (21) vers la deuxième zone d'échange de chaleur (22) au niveau de la deuxième boite collectrice (40).

10. Ensemble de refroidissement (1) selon l'une des revendications 7 à 9, la deuxième zone d'échange de chaleur (22) étant configurée de sorte que la portion de circulation directe (60) soit disposée entre la première zone d'échange de chaleur (21) et la portion de circulation indirecte (62) de la deuxième zone d'échange de chaleur (22).

11. Ensemble de refroidissement (1) selon l'une des revendications 1 à 6, la deuxième zone d'échange de chaleur (22) étant configurée de sorte que la portion de circulation indirecte (62) soit disposée entre la première zone d'échange de chaleur (21) et la portion de circulation directe (60) de la deuxième zone d'échange de chaleur (22).

12. Ensemble de refroidissement (1) selon l'une quelconque des revendications précédentes, **caractérisé en ce que** le circuit de refroidissement (6) du moteur électrique (28) et de ses composants électroniques de commande (30) comporte deux boucles (24, 26) de circuits en parallèles reliées respectivement au moteur électrique et aux composants électroniques de commande du moteur, lesdites deux boucles comportant :
une première boucle (24) sur laquelle est disposé le moteur électrique (28) et qui est agencée entre la tubulure d'entrée (32) et la tubulure de sortie (34) correspondant à la portion de circulation directe (60) de la deuxième zone d'échange de chaleur (22) et
une deuxième boucle (26) sur laquelle sont disposés les composants électroniques (30) et qui est agencée entre la tubulure d'entrée (32) et la tubulure de sortie (36) correspondant à la portion de circulation indirecte (62) de la deuxième zone d'échange de chaleur (22).

13. Procédé de commande d'un ensemble de refroidissement (1) d'un véhicule mû au moins partiellement par un moteur électrique (28), ledit ensemble de refroidissement comportant un échangeur de chaleur (20) commun au circuit de fluide caloporteur pour le refroidissement du dispositif de stockage électrique et au circuit de refroidissement du moteur électrique et de ses composants électroniques de commande, ledit échangeur de chaleur (20) comportant
une première boite collectrice (38),
une deuxième boîte collectrice (40),
et un faisceau de tubes (42) ou de plaques empilé(e)s les un(e)s sur les autres, les tubes ou plaques étant agencé(e)s entre les boites collectrices en étant relié(e)s de façon fluidique à chacune de ces boites,
une première paroi de compartimentation (44) agencée en travers de la première boîte collectrice (38) et une deuxième paroi de compartimentation (46) agencée en travers de la deuxième boîte collectrice (40) de manière à définir dans l'échangeur de chaleur une première zone d'échange de chaleur (21) et une deuxième zone d'échange de chaleur (22),
deux tubulures d'entrée (32, 48) agencées sur la première boite collectrice (38) de part et d'autre de la première paroi de compartimentation (44), et
trois tubulures de sortie (34, 36, 50) agencées sur la deuxième boite collectrice (40), une tubulure de sortie (50) étant agencée d'un côté de la deuxième paroi de compartimentation (46) dans la première zone d'échange de chaleur (21) et deux tubulures de sortie (34, 36) étant agencées de l'autre côté de la deuxième paroi de compartimentation (46) dans la deuxième zone d'échange de chaleur (22), ladite première zone d'échange de chaleur (21) disposée sur une branche (18) d'un circuit de fluide caloporteur (4) en parallèle d'une branche (16) sur laquelle est ménagée un échangeur thermique (12) commun au circuit de fluide caloporteur (4) et à un circuit de fluide réfrigérant (2) destiné à traiter thermiquement un habitacle du véhicule automobile et ladite deuxième zone d'échange de chaleur (22) disposée sur une boucle de refroidissement (6) du moteur électrique (28) et des composants électroniques de commande (30) de ce moteur, l'échangeur de chaleur (20) comportant des moyens de communication fluidique (66, 68) des deux zones d'échange de chaleur (21, 22), lesdits moyens de communication étant utilisés pour laisser passer du fluide de refroidissement depuis la deuxième zone d'échange de chaleur vers la première zone d'échange de chaleur lorsqu'aucun fluide caloporteur ne circule dans la branche (18) du circuit de fluide caloporteur sur laquelle est ménagée l'échangeur de chaleur, de manière à augmenter la surface d'échange thermique pour le fluide circulant dans le circuit de refroidissement du moteur et de ses composants électroniques de commande.

## Patentansprüche

1. Kühlanordnung (1) für ein Fahrzeug, das zumindest teilweise von einem Elektromotor (28) angetrieben wird, umfassend einen Kältemittelkreislauf (2) zur thermischen Behandlung des Fahrgastraums des Kraftfahrzeugs, einen Wärmeträgerfluidkreislauf (4) zur Kühlung einer elektrischen Speichervorrichtung (14) und einen Kühlkreislauf (6) für den Elektromotor (28) und dessen elektronische Steuerkomponenten (30), umfassend einen Wärmetauscher (20), der dem Wärmeträgerfluidkreislauf zur Kühlung der elektrischen Speichervorrichtung und dem Kühlkreislauf für den Elektromotor und dessen elektronische Steuerkomponenten gemeinsam ist, wobei der Wärmetauscher (20) einen ersten Sammelkasten (38), einen zweiten Sammelkasten (40) und ein Bündel von Röhren (42) oder Platten umfasst, die übereinander gestapelt sind, wobei die Röhren oder Platten zwischen den Sammelkästen angeordnet und fluidisch mit jedem dieser Kästen verbunden sind, wobei der Wärmetauscher (20) eine erste Trennwand (44), die quer zum ersten Sammelkasten (38) angeordnet ist, und eine zweite Trennwand (46) umfasst, die quer zum zweiten Sammelkasten (40) angeordnet ist, um im Wärmetauscher eine erste Wärmeaustauschzone (21) und eine zweite Wärmeaustauschzone (22) zu definieren, zwei Einlassstutzen (32, 48), die am ersten Sammelkasten (38) auf beiden Seiten der ersten Trennwand (44) angeordnet sind, und drei Auslassstutzen (34, 36, 50), die am zweiten Sammelkasten (40) angeordnet sind, wobei ein Auslassstutzen (50) auf einer Seite der zweiten Trennwand (46) in der ersten Wärmeaustauschzone (21) angeordnet ist und zwei Auslassstutzen (34, 36) auf der anderen Seite der zweiten Trennwand (46) in der zweiten Wärmeaustauschzone (22) angeordnet sind, wobei der Wärmeträgerfluidkreislauf (4) zur Kühlung der elektrischen Speichervorrichtung (14) einen ersten Zweig (16) und einen zweiten Zweig (18) umfasst, wobei der erste Zweig einen gemeinsamen Wärmetauscher (12) für den Wärmeträgerfluidkreislauf und den Kältemittelkreislauf zur thermischen Behandlung eines Fahrgastraums des Kraftfahrzeugs umfasst, wobei der Wärmetauscher (20) am zweiten Zweig (18) angeordnet ist, so dass der zweite Zweig mit der ersten Wärmeaustauschzone (21) dieses Wärmetauschers in Verbindung steht.

2. Kühlanordnung (1) nach Anspruch 1, wobei der erste und der zweite Sammelkasten (38, 40) des Wärmetauschers (20) ferner jeweils mindestens eine Segmentierungswand (51, 52) umfassen, die quer zum entsprechenden Sammelkasten angeordnet ist, wobei die Segmentierungswände in Stapelrichtung der Röhren (42) oder Platten versetzt sind, um mehrere Fluidzirkulationspfade (54, 56, 58) innerhalb der zweiten Wärmeaustauschzone (22) zu definieren.

3. Kühlanordnung (1) nach einem der vorhergehenden Ansprüche, wobei die beiden Auslassstutzen (34, 36), die am zweiten Sammelkasten (40) auf derselben Seite der zweiten Trennwand in der zweiten Wärmeaustauschzone (22) angeordnet sind, durch mindestens eine Segmentierungswand (52) getrennt sind.

4. Kühlanordnung (1) nach Anspruch 2 oder 3, wobei zwei Segmentierungswände (51, 52), die jeweils quer zum ersten und zweiten Sammelkasten (38, 40) angeordnet sind, an der Definition eines direkten Zirkulationsabschnitts (60) des Fluids beteiligt sind, in dem das Fluid in einer einzigen Richtung vom Einlassstutzen (32) der zweiten Wärmeaustauschzone zu einem Auslassstutzen (34) zirkuliert, und eines indirekten Zirkulationsabschnitts (62) des Fluids, in dem das Fluid nacheinander in beiden Richtungen zwischen dem ersten Sammelkasten und dem zweiten Sammelkasten zirkuliert.

5. Kühlanordnung (1) nach dem vorhergehenden Anspruch, wobei die Segmentierungswände (51, 52), die quer zu den Sammelkästen (38, 40) in der zweiten Wärmeaustauschzone (22) angeordnet sind, um die beiden direkten Zirkulationsabschnitte (60) und indirekten Zirkulationsabschnitte (62) zu definieren, so angeordnet sind, dass sie in Bezug auf die zweite Wärmeaustauschzone versetzt sind.

6. Kühlanordnung (1) nach einem der vorhergehenden Ansprüche, wobei die Trennwände (44, 46) quer zu den Sammelkästen (38, 40) versetzt zum Wärmetauscher angeordnet sind, so dass die zweite Wärmeaustauschzone (22) größer ist als die erste Wärmeaustauschzone (21).

7. Kühlanordnung (1) nach einem der vorhergehenden Ansprüche, wobei Fluidverbindungsmittel (66, 68) zwischen der ersten Wärmeaustauschzone (21) und der zweiten Wärmeaustauschzone (22) angeordnet sind.

8. Kühlanordnung (1) nach dem vorhergehenden Anspruch, wobei die Fluidverbindungsmittel (66, 68) so angeordnet sind, dass sie den Durchgang von Fluid von der zweiten Wärmeaustauschzone (22) zur ersten Wärmeaustauschzone (21) ermöglichen.

9. Kühlanordnung (1) nach Anspruch 7 oder 8, wobei die Fluidverbindungsmittel (66, 68) so angeordnet sind, dass sie den Durchgang von Fluid von der zweiten Wärmeaustauschzone (22) zur ersten Wärmeaustauschzone (21) auf Höhe des ersten Sammelkastens (38) ermöglichen, und so, dass sie den Durchgang von Fluid von der ersten Wärmeaustauschzone (21) zur zweiten Wärmeaustauschzone (22) auf Höhe des zweiten Sammelkastens (40) ermöglichen.

10. Kühlanordnung (1) nach einem der Ansprüche 7 bis 9, wobei die zweite Wärmeaustauschzone (22) so konfiguriert ist, dass der direkte Zirkulationsabschnitt (60) zwischen der ersten Wärmeaustauschzone (21) und dem indirekten Zirkulationsabschnitt (62) der zweiten Wärmeaustauschzone (22) angeordnet ist.

11. Kühlanordnung (1) nach einem der Ansprüche 1 bis 6, wobei die zweite Wärmeaustauschzone (22) so konfiguriert ist, dass der indirekte Zirkulationsabschnitt (62) zwischen der ersten Wärmeaustauschzone (21) und dem direkten Zirkulationsabschnitt (60) der zweiten Wärmeaustauschzone (22) angeordnet ist.

12. Kühlanordnung (1) nach einem der vorhergehenden Ansprüche, **dadurch gekennzeichnet, dass** der Kühlkreislauf (6) des Elektromotors (28) und dessen elektronische Steuerkomponenten (30) zwei parallele Kreislaufschleifen (24, 26) umfasst, die jeweils mit dem Elektromotor und den elektronischen Steuerkomponenten des Motors verbunden sind, wobei die beiden Schleifen umfassen: eine erste Schleife (24), an der der Elektromotor (28) angeordnet ist und die zwischen dem Einlassstutzen (32) und dem Auslassstutzen (34) angeordnet ist, die dem direkten Zirkulationsabschnitt (60) der zweiten Wärmeaustauschzone (22) entsprechen, und eine zweite Schleife (26), an der die elektronischen Komponenten (30) angeordnet sind und die zwischen dem Einlassstutzen (32) und dem Auslassstutzen (36) angeordnet ist, die dem indirekten Zirkulationsabschnitt (62) der zweiten Wärmeaustauschzone (22) entsprechen.

13. Verfahren zur Steuerung einer Kühlanordnung (1) eines Fahrzeugs, das zumindest teilweise von einem Elektromotor (28) angetrieben wird, wobei die Kühlanordnung einen Wärmetauscher (20) umfasst, der dem Wärmeträgerfluidkreislauf zur Kühlung der elektrischen Speichervorrichtung und dem Kühlkreislauf für den Elektromotor und dessen elektronische Steuerkomponenten gemeinsam ist, wobei der Wärmetauscher (20) einen ersten Sammelkasten (38), einen zweiten Sammelkasten (40) und ein Bündel von Röhren (42) oder Platten umfasst, die übereinander gestapelt sind, wobei die Röhren oder Platten zwischen den Sammelkästen angeordnet und fluidisch mit jedem dieser Kästen verbunden sind, eine erste Trennwand (44), die quer zum ersten Sammelkasten (38) angeordnet ist, und eine zweite Trennwand (46), die quer zum zweiten Sammelkasten (40) angeordnet ist, um im Wärmetauscher eine erste Wärmeaustauschzone (21) und eine zweite Wärmeaustauschzone (22) zu definieren, zwei Einlassstutzen (32, 48), die am ersten Sammelkasten (38) auf beiden Seiten der ersten Trennwand (44) angeordnet sind, und drei Auslassstutzen (34, 36, 50), die am zweiten Sammelkasten (40) angeordnet sind, wobei ein Auslassstutzen (50) auf einer Seite der zweiten Trennwand (46) in der ersten Wärmeaustauschzone (21) angeordnet ist und zwei Auslassstutzen (34, 36) auf der anderen Seite der zweiten Trennwand (46) in der zweiten Wärmeaustauschzone (22) angeordnet sind, wobei die erste Wärmeaustauschzone (21) an einem Zweig (18) eines Wärmeträgerfluidkreislaufs (4) parallel zu einem Zweig (16) angeordnet ist, an dem ein Wärmetauscher (12) angeordnet ist, der dem Wärmeträgerfluidkreislauf (4) und einem Kältemittelkreislauf (2) zur thermischen Behandlung eines Fahrgastraums des Kraftfahrzeugs gemeinsam ist, und wobei die zweite Wärmeaustauschzone (22) an einem Kühlkreislauf (6) des Elektromotors (28) und der elektronischen Steuerkomponenten (30) dieses Motors angeordnet ist, wobei der Wärmetauscher (20) Fluidverbindungsmittel (66, 68) für die beiden Wärmeaustauschzonen (21, 22) umfasst, wobei diese Verbindungsmittel verwendet werden, um Kühlfluid von der zweiten Wärmeaustauschzone zur ersten Wärmeaustauschzone passieren zu lassen, wenn kein Wärmeträgerfluid in dem Zweig (18) des Wärmeträgerfluidkreislaufs zirkuliert, an dem der Wärmetauscher angeordnet ist, um die thermische Austauschfläche für das Fluid zu erhöhen, das im Kühlkreislauf des Motors und seiner elektronischen Steuerkomponenten zirkuliert.

## Claims

1. Cooling assembly (1) for a vehicle driven at least partially by an electric motor (28), comprising a refrigerant fluid circuit (2) intended for thermally treating the passenger compartment of the motor vehicle, a heat transfer fluid circuit (4) for cooling an electrical storage device (14) and a cooling circuit (6) for the electric motor (28) and its electronic control components (30), comprising a heat exchanger (20) common to the heat transfer fluid circuit for cooling the electrical storage device and to the cooling circuit for the electric motor and its electronic control components, said heat exchanger (20) comprising a first header box (38), a second header box (40), and a bundle of tubes (42) or plates stacked one on top of the other, the tubes or plates being arranged between the header boxes, being fluidically connected to each of these boxes, said heat exchanger (20) comprising a first partitioning wall (44) arranged across the first header box (38) and a second partitioning wall (46) arranged across the second header box (40) so as to define in the heat exchanger a first heat exchange zone (21) and a second heat exchange zone (22), two inlet nozzles (32, 48) arranged on the first header box (38) on either side of the first partitioning wall (44), and three outlet nozzles (34, 36, 50) arranged on the second header box (40), one outlet nozzle (50) being arranged on one side of the second partitioning wall (46) in the first heat exchange zone (21) and two outlet nozzles (34, 36) being arranged on the other side of the second partitioning wall (46) in the second heat exchange zone (22), the heat transfer fluid circuit (4) for cooling the electrical storage device (14) comprising a first branch (16) and a second branch (18), the first branch comprising a common thermal exchanger (12) for the heat transfer fluid circuit and the refrigerant fluid circuit intended for thermally treating a passenger compartment of the motor vehicle, said heat exchanger (20) being arranged on the second branch (18) such that the second branch communicates with the first heat exchange zone (21) of this heat exchanger.

2. Cooling assembly (1) according to claim 1, the first and second header boxes (38, 40) of said heat exchanger (20) further each comprising at least one segmentation wall (51, 52) arranged across the corresponding header box, said segmentation walls being offset in the stacking direction of the tubes (42) or plates so as to define several fluid circulation passes (54, 56, 58) inside the second heat exchange zone (22).

3. Cooling assembly (1) according to any one of the preceding claims, the two outlet nozzles (34, 36) arranged on the second header box (40) on the same side of the second partitioning wall in the second heat exchange zone (22) being separated by at least one segmentation wall (52).

4. Cooling assembly (1) according to claim 2 or 3, two segmentation walls (51, 52) arranged respectively across the first and second header box (38, 40) participating in defining a direct circulation portion (60) of the fluid in which the fluid circulates in a single direction from the inlet nozzle (32) of the second heat exchange zone to an outlet nozzle (34) and an indirect circulation portion (62) of the fluid in which the fluid circulates successively in both directions between the first header box and the second header box.

5. Cooling assembly (1) according to the preceding claim, the segmentation walls (51, 52) arranged across the header boxes (38, 40) in the second heat exchange zone (22) to define said two direct circulation portions (60) and indirect circulation portions (62) being arranged so as to be offset with respect to said second heat exchange zone.

6. Cooling assembly (1) according to any one of the preceding claims, the partitioning walls (44, 46) being arranged across the header boxes (38, 40) in an offset manner with respect to the heat exchanger, so that the second heat exchange zone (22) is larger than the first heat exchange zone (21).

7. Cooling assembly (1) according to any one of the preceding claims, fluid communication means (66, 68) being arranged between the first heat exchange zone (21) and the second heat exchange zone (22).

8. Cooling assembly (1) according to the preceding claim, the fluid communication means (66, 68) being arranged so as to allow the passage of fluid from the second heat exchange zone (22) to the first heat exchange zone (21).

9. Cooling assembly (1) according to claim 7 or 8, the fluid communication means (66, 68) being arranged so as to allow the passage of fluid from the second heat exchange zone (22) to the first heat exchange zone (21) at the level of the first header box (38), and so as to allow the passage of fluid from the first heat exchange zone (21) to the second heat exchange zone (22) at the level of the second header box (40).

10. Cooling assembly (1) according to any one of claims 7 to 9, the second heat exchange zone (22) being configured so that the direct circulation portion (60) is arranged between the first zone of heat exchange (21) and the indirect circulation portion (62) of the second zone of heat exchange (22).

11. Cooling assembly (1) according to any one of claims 1 to 6, the second heat exchange zone (22) being configured so that the indirect circulation portion (62) is arranged between the first heat exchange zone (21) and the direct circulation portion (60) of the second heat exchange zone (22).

12. Cooling assembly (1) according to any one of the preceding claims, **characterized in that** the cooling circuit (6) of the electric motor (28) and its electronic control components (30) comprises two parallel circuit loops (24, 26) connected respectively to the electric motor and to the electronic control components of the motor, said two loops comprising: a first loop (24) on which the electric motor (28) is arranged and which is arranged between the inlet nozzle (32) and the outlet nozzle (34) corresponding to the direct circulation portion (60) of the second heat exchange zone (22) and a second loop (26) on which the electronic components (30) are arranged and which is arranged between the inlet nozzle (32) and the outlet nozzle (36) corresponding to the indirect circulation portion (62) of the second heat exchange zone (22).

13. Method for controlling a cooling assembly (1) of a vehicle driven at least partially by an electric motor (28), said cooling assembly comprising a heat exchanger (20) common to the heat transfer fluid circuit for cooling the electrical storage device and to the cooling circuit for the electric motor and its electronic control components, said heat exchanger (20) comprising a first header box (38), a second header box (40), and a bundle of tubes (42) or plates stacked one on top of the other, the tubes or plates being arranged between the header boxes, being fluidically connected to each of these boxes, a first partitioning wall (44) arranged across the first header box (38) and a second partitioning wall (46) arranged across the second header box (40) so as to define in the heat exchanger a first heat exchange zone (21) and a second heat exchange zone (22), two inlet nozzles (32, 48) arranged on the first header box (38) on either side of the first partitioning wall (44), and three outlet nozzles (34, 36, 50) arranged on the second header box (40), one outlet nozzle (50) being arranged on one side of the second partitioning wall (46) in the first heat exchange zone (21) and two outlet nozzles (34, 36) being arranged on the other side of the second partitioning wall (46) in the second heat exchange zone (22), said first heat exchange zone (21) arranged on a branch (18) of a heat transfer fluid circuit (4) in parallel with a branch (16) on which a thermal exchanger (12) common to the heat transfer fluid circuit (4) and a refrigerant fluid circuit (2) intended for thermally treating a passenger compartment of the motor vehicle is arranged, and said second heat exchange zone (22) arranged on a cooling loop (6) of the electric motor (28) and the electronic control components (30) of this motor, the heat exchanger (20) comprising fluid communication means (66, 68) for the two heat exchange zones (21, 22), said communication means being used to allow cooling fluid to pass from the second heat exchange zone to the first heat exchange zone when no heat transfer fluid is circulating in the branch (18) of the heat transfer fluid circuit on which the heat exchanger is arranged, so as to increase the thermal exchange surface for the fluid circulating in the cooling circuit of the motor and its electronic control components.
